(19) Europäisches Patentamt / European Patent Office / Office européen des brevets

(11) **EP 1 983 253 B1**

(12) **EUROPÄISCHE PATENTSCHRIFT**

(45) Veröffentlichungstag und Bekanntmachung des Hinweises auf die Patenterteilung:
**02.11.2011  Patentblatt 2011/44**

(51) Int Cl.:
*F21S 8/12* (2006.01)     *F21V 5/00* (2006.01)
*F21Y 101/02* (2006.01)    *F21W 101/10* (2006.01)

(21) Anmeldenummer: **08103559.4**

(22) Anmeldetag: **16.04.2008**

(54) **Scheinwerfer für Fahrzeuge**

Headlamp for vehicles

Phare pour véhicules

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.04.2007  DE 102007018988**

(43) Veröffentlichungstag der Anmeldung:
**22.10.2008  Patentblatt 2008/43**

(73) Patentinhaber: **Hella KGaA Hueck & Co.
59552 Lippstadt (DE)**

(72) Erfinder:
• **Eichhorn, Karsten
59329 Wadersloh (DE)**

• **Kloos, Gerhard
59597 Erwitte (DE)**

(56) Entgegenhaltungen:
**DE-A1-102004 056 252     FR-A- 2 860 281**

• **SCHRODER G ED - SCHRODER G: "Technische Optik, 2.6 ANWENDUNG ASPHAERISCHER FLAECHEN" TECHNISCHE OPTIK. GRUNDLAGEN UND ANWENDUNGEN, WUERZBURG, VOGEL BUCHVERLAG, DE, 1. Januar 1990 (1990-01-01), Seiten 54-55, XP002222505 ISBN: 978-3-8023-0067-7**

**Beschreibung**

Beschreibung

Die Erfindung betrifft einen Scheinwerfer für Fahrzeuge nach dem Oberbegriff des Patentanspruchs 1.

Aus der DE 103 15 131 A1 ist ein Scheinwerfer für Fahrzeuge bekannt, der eine Lichtquelleneinheit mit einer Mehrzahl von LED-Leuchtelementen aufweist. In Lichtabstrahlrichtung vor den Leuchtelementen ist eine Optikeinheit angeordnet, mittels derer eine vorgegebene Lichtverteilung erzeugt wird. Die LED-Leuchtelemente bilden ein Leuchtfeld, das direkt an einer ebenen Lichteinkoppelfläche der Optikeinheit anliegt. Die Optikeinheit ist durch einen Linsenkörper gebildet, der auf einer der Lichtquelleneinheit abgewandten Seite eine konvexförmige Lichtauskoppelfläche aufweist. Zur Bildung einer vorgegebenen Lichtverteilung sieht der bekannte Scheinwerfer vor, dass die Lichtquelleneinheit eine vorgegebene Randkante aufweist zur Erzeugung einer Hell-Dunkel-Grenze.

Aus der FR 2 860 281 A1 ist ein Scheinwerfer mit einer Lichtquelleneinheit und einer Optikeinheit bekannt. Die Optikeinheit umfasst mehrere eilipsoidförmige Linsen, die jeweils einem Leuchtelement der Lichtquelleneinheit zugeordnet sind. Die Linsen weisen jeweils auf einer dem Leuchtelement zugeordneten Seite eine ellipsoidförmige Ausnehmung auf, in der das leuchtelement gelagert ist.

Aus der DE 10 2004 056 252 A1 ist ein Scheinwerfer für Fahrzeuge bekannt, der eine Lichtquelleneinheit mit einer Mehrzahl von Leuchtelementen sowie eine in Lichtabstrahlrichtung vorgelagerte Optikeinheit aufweist. Die Optikeinheit weist eine bauchige Lichtauskoppelfläche auf, die refraktiv oder defraktiv ausgebildet sein kann. Weitergehende konkrete Angaben zur Ausformung der Lichtauskoppelfläche werden nicht gemacht.

Aufgabe der vorliegenden Erfindung ist es, einen Scheinwerfer für Fahrzeuge derart weiterzubilden, dass eine vorgegebene Lichtverteilung mit einer relativ großen Streubreite und einer scharfen Hell-Dunkel-Grenze mit hoher Effektivität erzeugt wird.

Zur Lösung dieser Aufgabe weist die Erfindung die Merkmale des Patentanspruchs 1 auf.

Der besondere Vorteil der Erfindung besteht darin, dass im Wesentlichen aufgrund der Formgebung einer Optikeinheit eine vorgegebene Lichtverteilung mit einer relativ hohen Lichtstromeffizienz erzeugt werden kann. Eine Lichtauskoppelfläche der Optikeinheit ist derart bauchig ausgebildet, dass zum einen eine Kollimation und zum anderen eine Streuwirkung in den beiden Hauptrichtungen erreicht wird. Die Lichtauskoppelfläche verläuft stetig, wobei in einem horizontalen Mittelschnitt dieselbe kegelschnittförmig mit einer konischen Konstante in einem Bereich zwischen -1 und 0 verläuft. Die anamorphotisch ausgestaltete Lichtauskoppelfläche weist mehrere unterschiedliche Krümmungslinienbereiche auf, die kontinuierlich ineinander übergehen. Die erfindungsgemäße Optikeinheit kann in einer sehr kompakten Bauweise bereitgestellt werden, so dass der Scheinwerfer bauraumsparend in einer Karosserieöffnung des Fahrzeugs angeordnet sein kann. Nach der Erfindung ist die Lichtauskoppelfläche der Optikeinheit auch in einem vertikalen Mittelschnitt kegelschnittförmig mit einer konischen Konstante zwischen -1 und 0 ausgebildet. In beiden Hauptschnitten weist die Lichtauskoppelfläche der Optikeinheit somit ähnlich gestaltete Krümmungslinien auf, so dass bei hoher Lichtausbeute ein kontinuierlicher und stetiger Verlauf der Lichtauskoppelfläche gebildet sein kann. Prägend für die Bildung der Lichtverteilung ist die Gestaltung der Lichtauskoppelfläche im horizontalen und vertikalen Mittelschnitt. In den zwischen den senkrecht zueinander stehenden Mittelschnitten verlaufenden Zwickelbereichen der Lichtauskoppelfläche gehen die Teilflächen der Lichtauskoppelfläche kontinuierlich ineinander über.

Nach einer bevorzugten Ausführungsform der Erfindung ist die Mehrzahl der als Leuchtdioden-Chips ausgebildeten Leuchtelemente in einem Vergusskörper eingefasst, dessen Brechzahl mit der Brechzahl des Materials der Optikeinheit übereinstimmt.

Die Erfindung basiert auf einer refraktiven Wirkung der Optikeinheit, das heißt die von der Lichtquelleneinheit in die Optikeinheit eingekoppelten Lichtstrahlen werden an der Lichtauskoppelfläche gebrochen. Die Erfindung ermöglicht eine relativ hohe optische Effizienz und eine hohe Robustheit gegenüber Temperatureinflüssen. Beispielsweise Kann die Optikeinheit aus einem transparenten Kunstoff=material hergestellt sein.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

Fig. 1    eine schematische Vorderansicht des Scheinwerfers mit eingezeichneten Krümmungslinien einer Optikeinheit des Scheinwerfers,

Fig. 2    einen vertikalen Mittelschnitt durch die Optikeinheit,

Fig. 3    einen horizontalen Mittelschnitt durch die Optikeinheit und

Fig. 4    eine schematische Darstellung einer Lichtverteilung des Scheinwerfers.

Ein Scheinwerfer für Fahrzeuge besteht im Wesentlichen aus einer Lichtquelleneinheit 1 und einer in Lichtabstrahlungsrichtung 2 vorgelagerten Optikeinheit 3, die in einem nicht dargestellten Gehäuse des Scheinwerfers angeordnet sind.

Die Lichtquelleneinheit 1 besteht aus einer Mehrzahl von Halbleiter-Leuchtelementen (LED-Leuchtelemente), die jeweils in einem Chip mit einem transparenten Vergusskörper eingefasst sind. Die LED-Leuchtelemente sind vorzugsweise in einer gemeinsamen Erstreckungsebene E, die senkrecht zu einer optischen Achse 4 der Optikeinheit 3 verläuft, angeordnet. Beispielsweise können die LED-Leuchtelemente in einem quadratischen Raster angeordnet sein. Die LED-Leuchtelemente der Lichtquelleneinheit 1 sind vorzugsweise in die gleiche Lichtabstrahlrichtung 2 ausgerichtet angeordnet.

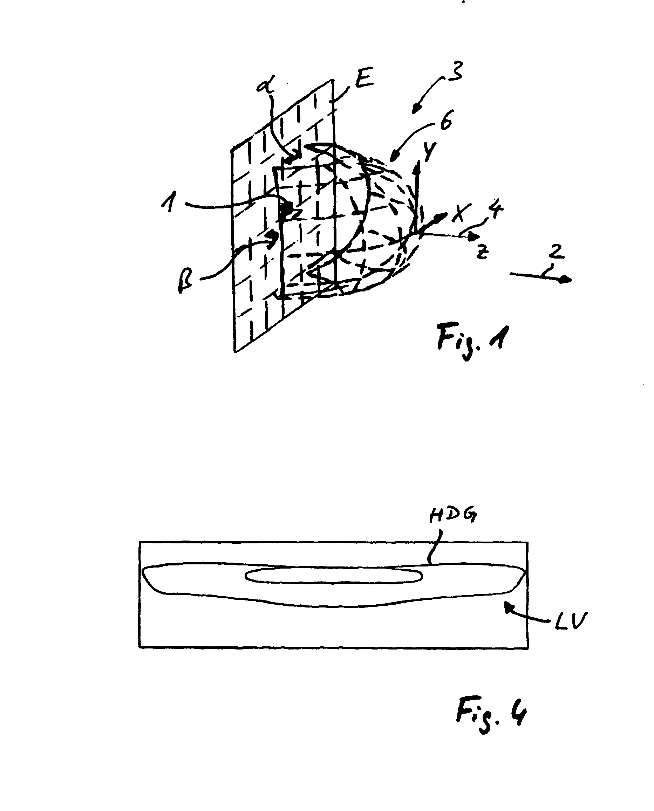

Wie aus Figur 1 zu ersehen ist, verläuft die optische Achse 4 in z-Richtung. Die x-Achse verläuft in horizontaler Richtung, während die y-Achse in vertikaler Richtung verläuft.

Die Optikeinheit 3 ist als ein Linsenkörper ausgebildet, der auf einer der Lichtquelleneinheit 1 zugewandten Seite eine ebene Lichteinkoppelfläche 5 und auf einer der Lichtquelleneinheit 1 abgewandten Seite eine bauchige Lichtauskoppelfläche 6 aufweist. Die Leuchtelemente der Lichtquelleneinheit 1 sind unmittelbar an der ebenen Lichteinkoppelfläche 5 angeordnet, um einen hohen Lichtstrom zu erzielen.

Alternativ können die rasterartig angeordneten LED-Leuchtelemente der Lichtquelleneinheit 1 auch in einem spitzen Winkel zu der Lichteinkoppelfläche 5 der Optikeinheit 3 angeordnet sein.

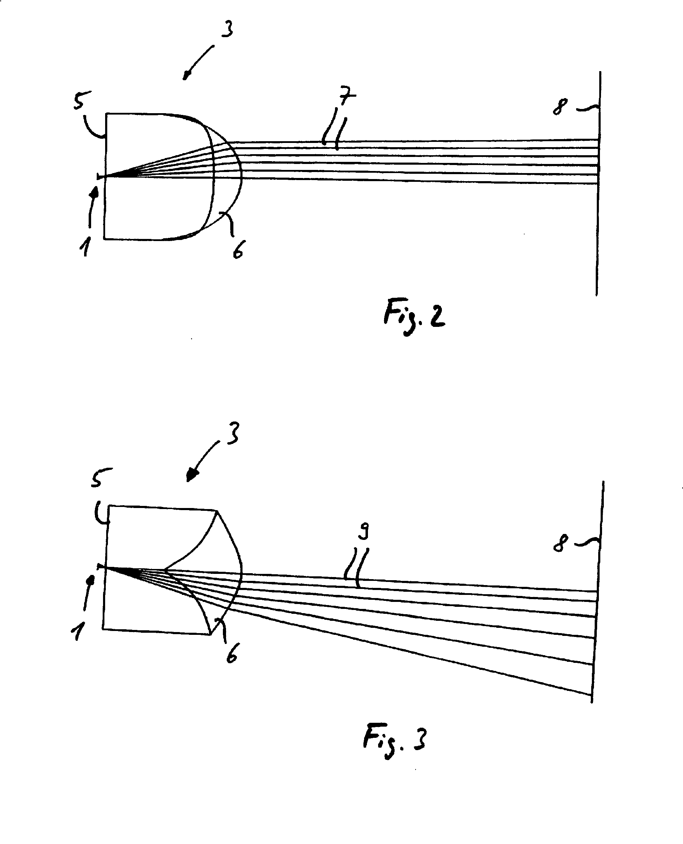

Wie aus Figur 1 ersichtlich ist, ist die Lichtauskoppelfläche 6 der Optikeinheit 3 anamorphotisch ausgebildet. Die Lichtauskoppelfläche 6 verläuft stetig bezüglich eines stumpfen horizontalen und vertikalen Öffnungswinkels α bzw. β. Die Lichtauskoppelfläche 6 ist derart ausgebildet, dass sie in einem horizontalen Mittelschnitt kegelschnittförmig mit einer konischen Konstante k in einem Bereich zwischen -1 und 0 verläuft, siehe Figur 3. Ferner ist die Lichtauskoppelfläche 6 derart ausgebildet, dass sie in einem vertikalen Mittelschnitt kegelschnittförmig mit einer konischen Konstante k in einem Bereich zwischen -1 und 0 verläuft, siehe Figur 2.

In einer einfachen Ausführungsform genügt die Lichtauskoppelfläche 6 folgender Formel:

$$\left[ (1+k_x)\left(\frac{x}{R_x}\right)^2 + (1+k_y)\left(\frac{y}{R_y}\right)^2 \right] z^2 - 2\left( \frac{1}{R_x} x^2 + \frac{1}{R_y} y^2 \right) z + \left( \frac{1}{R_x} x^2 + \frac{1}{R_y} y^2 \right)^2 = 0,$$

wobei

$x, y, z$     kartesische Koordinaten. Die optische Achse der Linse fällt mit der $z$-Achse zusammen,
$R_x$     der Radius des lokalen Krümmungskreises im x,z-Schnitt,
$R_y$     der Radius des lokalen Krümmungskreises im y,z-Schnitt,
$k_x$     die konische Konstante für den x,z-Schnitt,
$k_y$     die konische Konstante für den y,z-Schnitt.

Wie aus Figur 2 ersichtlich ist, ist die Lichtauskoppelfläche 6 der Optikeinheit 3 zumindest in der vertikalen Mittelebene derart geformt, dass von der Lichtquelleneinheit 1 emittierte Lichtstrahlen 7 parallelisiert werden, so dass dieselben nach Brechung an der Lichtauskoppelfläche 6 parallel zueinander auf einen in einem Abstand angeordneten Messschirm 8 treffen.

Wie aus den Figuren 2 und 3 ersichtlich ist, werden die Lichtstrahlen 7, 9 derart eingekoppelt, dass sie direkt in Richtung der Lichtauskoppelfläche 6 verlaufen, an der sie gebrochen werden. Die Optikeinheit 3 weist somit eine refraktive Wirkung auf.

Wie aus Figur 3 ersichtlich ist, ist die Lichtauskoppelfläche 6 zumindest in einer horizontalen Mittelebene der Lichtauskoppelfläche 6 derart geformt, dass von der Lichtquelleneinheit 7 abgestrahlte Lichtstrahlen 9 bezüglich der optischen Achse 4 in horizontaler Richtung gestreut werden, so dass sie eine in Figur 4 dargestellte Lichtverteilung LV mit einer relativ großen Streubreite erzeugen.

Vorzugsweise wird durch die Erfindung zum einen eine Kollimation und zum anderen eine Streuwirkung in den beiden Hauptrichtungen der Lichtauskoppelfläche 6 erzielt. Eine relativ scharfe Hell-Dunkel-Grenze HDG der Lichtverteilung LV wird ausgebildet.

Vorzugsweise weisen der transparente Vergusskörper der LED-Leuchtelemente-Chips die gleiche Brechzahl auf wie das Material der Optikeinheit 3. Die Optikeinheit 3 kann beispielsweise aus einem transparenten Kunststoffmaterial durch Spritzgießen hergestellt sein.

Der erfindungsgemäße Scheinwerfer kann beispielsweise zur Erzeugung einer Abblendlichtverteilung LV dienen.

Bezugszeichenliste

1    Lichtquelleneinheit
2    Lichtabstrahlrichtung
3    Optikeinheit
4    Optische Achse
5    Ebene Lichteinkoppelfläche
6    Lichtauskoppelfläche
7    Lichtstrahlen
8    Messschirm
9    Lichtstrahlen


**Patentansprüche**

1.  Scheinwerfer für Fahrzeuge mit einer aus einer Mehrzahl von Leuchtelementen gebildeten Lichtquelleneinheit (1) und mit einer in Lichtabstrahlrichtung (2) vor der Lichtquelleneinheit (1) angeordneten Optikeinheit (3) zur Erzeugung einer vorgegebenen Lichtverteilung (LV), wobei die Optikeinheit (3) auf einer der Lichtquelleneinheit (1) abgewandten Seite eine bauchige Lichtauskoppelfläche (6) und auf einer der Lichtquelleneinheit (1) zugewandten Seite eine ebene Lichteinkoppelfläche (5) aufweist, **dadurch gekennzeichnet, dass** die Lichtauskoppelfläche (6) der Optikeinheit (3) in einem vertikalen Mittelschnitt kegelschnittförmig mit einer konischen Konstante (k) in einem Bereich zwischen -1 und 0 verläuft, so dass von der Lichtquelleneinheit (1) emittierte Lichtstrahlen (7) parallelisiert werden, und dass die Lichtauskoppelfläche (6) der Optikeinheit (3) in einem horizontalen Mittelschnitt kegelschnittförmig mit einer konischen Konstante (k) in einem Bereich zwischen -1 und 0 verläuft, so dass die von der Lichtquelleneinrichtung (1) emittierten Lichtstrahlen (9) bezüglich der optischen Achse (4) in horizontaler Richtung gestreut werden.

2.  Scheinwerfer nach Anspruch 1, **dadurch gekennzeichnet, dass** die Leuchtelemente der Lichtquelleneinheit (1) in die gleiche Lichtabstrahlrichtung (2) ausgerichtet angeordnet sind.

3.  Scheinwerfer nach Anspruch 1 oder 2, **dadurch gekennzeichnet, dass** die Lichtabstrahlrichtung (2) der Lichtquelleneinheit (1) senkrecht oder geneigt zu der Lichteinkoppelfläche (5) der Optikeinheit (3) angeordnet ist.

4.  Scheinwerfer nach einem der Ansprüche 1 bis 3, **dadurch gekennzeichnet, dass** sich die Lichtauskoppelfläche (6) der Optikeinheit (3) bezüglich eines stumpfen horizontalen Öffnungswinkels ($\alpha$) und eines vertikalen Öffnungswinkels ($\beta$) erstreckt.

5.  Scheinwerfer nach einem der Ansprüche 1 bis 4, **dadurch gekennzeichnet, dass** die Lichtauskoppelfläche (6) der Optikeinheit (3) anamorphotisch ausgebildet ist.

6.  Scheinwerfer nach einem der Ansprüche 1 bis 5, **dadurch gekennzeichnet, dass** die Lichtauskoppelfläche (6) der Optikeinheit (3) eine Linsenfläche mit einer optischen Achse bildet, deren Kennwerte folgender Beziehung genügen:

$$\left[ (1+k_x)\left(\frac{x}{R_x}\right)^2 + (1+k_y)\left(\frac{y}{R_y}\right)^2 \right] z^2 - 2\left(\frac{1}{R_x}x^2 + \frac{1}{R_y}y^2\right) z + \left(\frac{1}{R_x}x^2 + \frac{1}{R_y}y^2\right)^2 = 0,$$

wobei

$x,y,z$ kartesische Koordinaten. Die optische Achse der Linse fällt mit der $z$-Achse zusammen,
$R_x$ der Radius des lokalen Krümmungskreises im x,z-Schnitt,
$R_y$ der Radius des lokalen Krümmungskreises im y,z-Schnitt,

$k_x$ die konische Konstante für den x,z-Schnitt,
$k_y$ die konische Konstante für den y,z-Schnitt.

7. Scheinwerfer nach einem der Ansprüche 1 bis 6, **dadurch gekennzeichnet, dass** die Brechzahl des die Leuchtelemente der Lichtquelleneinheit (1) abdeckenden transparenten Vergusskörpers mit der Brechzahl des Material der Optikeinheit (3) übereinstimmt.

**Claims**

1. Headlights for vehicles with a light source unit (1) comprising multiple lighting elements and an optical unit (3) arranged in direction of light emission (2) in front of the light source unit (1) for producing a predetermined light distribution (LV), whereas the optical unit (3) shall have a bulbous light outcoupling surface (6) on the side faced away from the light source unit (1) and a planar light incoupling surface (5) on the side facing the light source unit (1), **characterized in that** the light outcoupling surface (6) of the optical unit (3) shall run in a vertical center cut in the shape of a conical section with a conical constant (k) in a range between -1 to 0, so that light beams (7) emitted by the light source unit (1) shall be paralleled and that the light outcoupling surface (6) of the optical unit (3) shall run in a horizontal center cut in the shape of a conical section with a conical constant (k) in a range between -1 to 0, so that the light beams (9) emitted by the light source unit (1) shall be scattered in horizontal direction in reference to the optical axis (4).

2. Headlight according to Claim 1, **characterized in that** the lighting elements of the light source unit (1) shall be aligned in the direction of light emission (2).

3. Headlight according to Claims 1 or 2, **characterized in that** the direction of light emission (2) of the light source unit (1) shall be arranged vertically or tilted to the light incoupling surface (5) of the optical unit (3).

4. Headlight according to one of Claims 1 to 3, **characterized in that** the light outcoupling surface (6) of the optical unit (3) shall extend in reference to an obtuse horizontal opening angle ($\alpha$) and a vertical opening angle (ß).

5. Headlight according to one of Claims 1 to 4, **characterized in that** the light outcoupling surface (6) of the optical unit (3) shall be shaped anamorphously.

6. Headlight according to one of Claims 1 to 5, **characterized in that** the light outcoupling surface (6) of the optical unit (3) shall form a lens surface with an optical axis which characteristic values shall meet the following relation:

$$\left[(1+k_x)\left(\frac{x}{R_x}\right)^2 + (1+k_y)\left(\frac{y}{R_y}\right)^2\right]z^2 - 2\left(\frac{1}{R_x}x^2 + \frac{1}{R_y}y^2\right)z + \left(\frac{1}{R_x}x^2 + \frac{1}{R_y}y^2\right)^2 = 0 \ ,$$

where

$x, y, z$ are Cartesian coordinates. The optical lens axis coincides with the $z$ axis,
$R_x$ radius of the local loop curvature in the x,z section,
$R_y$ radius of the local loop curvature in the y,z section,
$k_x$ conical constant for the x,z section,
$k_y$ conical constant for the y,z section.

7. Headlight according to one of Claims 1 to 6, **characterized in that** the refractive index of the casting body covering the lighting elements of the light source unit (1) shall match the refractive index of the material of the optical unit (3).

**Revendications**

1. Projecteur pour véhicules avec une unité de source de lumière (1) formée d'une majorité d'éléments lumineux et avec une unité optique (3) disposée devant l'unité de source de lumière (1) en direction du rayonnement de lumière (2) pour générer une répartition lumineuse (LV) prédéterminée, l'unité optique (3) présentant une surface de découplage de lumière bombée (6) sur le côté détourné de l'unité de source de lumière (1) et une surface de couplage de lumière plane (5) sur le côté tourné vers l'unité de source de lumière (1),

**caractérisé en ce que** la surface de découplage de lumière (6) de l'unité optique (3) s'étend dans une coupe moyenne verticale à forme conique à une constante (k) conique dans une plage entre -1 et 0, de manière à ce que les rayons lumineux (7) émis par l'unité de source de lumière (1) soient mis en parallèle et que la surface de découplage de lumière (6) de l'unité optique (3) s'étend dans une coupe moyenne horizontale à forme conique à une constante (k) conique dans une plage entre -1 et 0, de manière à ce que les rayons lumineux (9) émis par l'unité de source de lumière (1) soient diffusés en direction horizontale par rapport à l'axe optique (4).

2.  Projecteur selon la revendication 1, **caractérisé en ce que** les éléments lumineux de l'unité de source de lumière (1) sont orientés et disposés dans la même direction de rayonnement de lumière (2).

3.  Projecteur selon la revendication 1 ou 2, **caractérisé en ce que la** direction du rayonnement de lumière (2) de l'unité de source de lumière (1) est disposée perpendiculairement ou inclinée par rapport à la surface de couplage de lumière (5) de l'unité optique (3).

4.  Projecteur selon l'une des revendications 1 à 3, **caractérisé en ce que** la surface de découplage de lumière (6) de l'unité optique (3) s'étend relatif à un angle d'ouverture obtus horizontal ($\alpha$) et un angle d'ouverture vertical ($\beta$).

5.  Projecteur selon l'une des revendications 1 à 4, **caractérisé en ce que** la surface de découplage de lumière (6) de l'unité optique (3) est anamorphotique.

6.  Projecteur selon l'une des revendications 1 à 5, **caractérisé en ce que** la surface de découplage de lumière (6) de l'unité optique (3) forme une surface de lentille avec un axe optique dont les valeurs caractéristiques satisfont la relation suivante :

$$\left[ (1+k_x)\left(\frac{x}{R_x}\right)^2 + (1+k_y)\left(\frac{y}{R_y}\right)^2 \right] z^2 - 2\left(\frac{1}{R_x}x^2 + \frac{1}{R_y}y^2\right)z + \left(\frac{1}{R_x}x^2 + \frac{1}{R_y}y^2\right)^2 = 0,$$

dont

x, y, z coordonnées cartésiennes. L'axe optique de la lentille concourt avec l'axe z.
$R_x$ le rayon du cercle de courbure local en coupe x, z
$R_y$ le rayon du cercle de courbure local en coupe y, z
$K_x$ la constante conique pour la coupe x, z
$K_y$ la constante conique pour la coupe y, z.

7.  Projecteur selon l'une des revendications 1 à 6, **caractérisé en ce que** le coefficient de réfraction du corps de scellement transparent qui couvre les éléments lumineux de l'unité de source de lumière (1) correspond au coefficient de réfraction de la matière de l'unité optique (3),

Fig. 1

Fig. 4

Fig. 2

Fig. 3

**IN DER BESCHREIBUNG AUFGEFÜHRTE DOKUMENTE**

**In der Beschreibung aufgeführte Patentdokumente**

- DE 10315131 A1
- FR 2860281 A1
- DE 102004056252 A1